# EUROPÄISCHE PATENTANMELDUNG

(11) **EP 3 305 142 A1**
(43) Veröffentlichungstag der Anmeldung: **11.04.2018**
(21) Anmeldenummer: 17192369.1
(22) Anmeldetag: 21.09.2017
(51) Int. Cl.: A47J 31/44, A47J 31/56

(54) **KAFFEEMASCHINE**

(30) Priorität: 04.10.2016 DE 102016219196
(71) Anmelder: BSH Hausgeräte GmbH, 81739 München (DE)
(72) Erfinder: Winkler, Gerhard, 83334 Inzell (DE); Wölfler, Andreas, 5760 Saalfelden (AT); Wallner, Katharina, 84561 Mehring (DE)

(57) **Zusammenfassung**

Die Erfindung betrifft eine Kaffeemaschine (1), insbesondere einen Kaffeevollautomat, mit einem Gehäuse (2), in welches ein mit Wasser befüllbarer oder befüllter Wassertank (3) einsetzbar ist. Die Kaffeemaschine (1) umfasst einen Anschluss (5) zum Versorgen der Kaffeemaschine (1) mit Wasser aus einer externen Wasserversorgung sowie eine Verbindungsleitung (4), welche den Anschluss (5) fluidisch mit dem Wassertank (3) verbindet. In der Verbindungsleitung (4) ist eine elektrisch verstellbare Ventileinrichtung (6) angeordnet, welche zwischen einem geöffneten und einem geschlossenen Zustand verstellbar ist. Am Gehäuse (2) ist eine erste Sensoreinrichtung (7) angeordnet. Die erste Sensoreinrichtung (7) ist derart ausgebildet, dass sie die Ventileinrichtung (6) bei in das Gehäuse eingesetztem Wassertank (3) in den geöffneten Zustand verstellt und bei aus dem Gehäuse (2) entnommenem Wassertank (3) in den geschlossenen Zustand verstellt. Am Wassertank (3) ist eine zweite Sensoreinrichtung (8) angeordnet. Mittels der zweiten Sensoreinrichtung (8) ist bei in das Gehäuse (2) eingesetztem Wassertank (3) das Überschreiten einer maximalen Befüllhöhe mit Wasser detektierbar. Die zweite Sensoreinrichtung (8) ist derart ausgebildet, dass sie bei Detektion einer Überschreitung der maximalen Füllhöhe die Ventileinrichtung (6) in den geschlossenen Zustand verstellt.

## Beschreibung

Die Erfindung betrifft eine Kaffeemaschine.

Kaffeemaschinen besitzen in der Regel ein Gehäuse, in welches ein Wassertank einsetzbar ist. Über einen Wasseranschluss kann besagte Kaffeemaschine an eine externe Wasserversorgung angeschlossen werden, so dass der Wassertank mit Wasser befüllt werden kann. Herkömmliche Kaffeemaschinen sind mit einer Ventileinrichtung, dem sogenannten "Aquastopventil" ausgestattet, welches in einem geschlossenen Zustand die Versorgung der Kaffeemaschine mit Wasser unterbricht. Ein solches Aquastopventil wird typischerweise von einer geeigneten elektronischen Steuerungseinrichtung angesteuert, die wiederum mit Sensoren zusammenwirkt, die Fehlfunktionen die Kaffeemaschine betreffend detektieren können.

Als problematisch erweist sich dabei der komplexe Aufbau der Steuerungseinrichtung und deren Zusammenwirken mit besagten Sensoren sowie dem Aquastopventil. Die Praxis hat gezeigt, dass oftmals Fehlerzustände, die zu einem unerwünschten Austritt von Wasser aus der Kaffeemaschine in die Umgebung führen, nicht mit der erforderlichen Sicherheit vermieden werden können.

Es ist daher eine Aufgabe der vorliegenden Erfindung, eine verbesserte Ausführungsform für eine Kaffeemaschine zu schaffen, bei welcher der unerwünschte Austritt von über die Wasserversorgung in die Kaffeemaschine eingeleitetem Wasser in die Umgebung der Kaffeemaschine besonders wirksam verhindert wird.

Diese Aufgabe wird durch eine Kaffeemaschine gemäß dem unabhängigen Patentanspruch 1 gelöst. Bevorzugte Ausführungsformen sind Gegenstand der abhängigen Patentansprüche.

Eine erfindungsgemäße Kaffeemaschine, insbesondere ein Kaffeevollautomat, umfasst ein Gehäuse, in welches ein mit Wasser befüllbarer oder befüllter Wassertank einsetzbar ist. Die Kaffeemaschine umfasst einen Anschluss zum Versorgen der Kaffeemaschine mit Wasser aus einer externen Wasserversorgung sowie eine Verbindungsleitung, welche den Anschluss fluidisch mit dem Wassertank verbindet. In der Verbindungsleitung ist eine elektrisch verstellbare Ventileinrichtung angeordnet, welche zwischen einem geöffneten und einem geschlossenen Zustand verstellbar ist. Im geschlossenen Zustand ist die Verbindung zwischen Anschluss und Wassertank unterbrochen, im geöffneten Zustand ist die Verbindung freigegeben. Am Gehäuse ist eine erste Sensoreinrichtung angeordnet. Die erste Sensoreinrichtung ist derart ausgebildet, dass sie die Ventileinrichtung bei in das Gehäuse eingesetztem Wassertank in den geöffneten Zustand verstellt und bei aus dem Gehäuse entnommenem Wassertank in den geschlossenen Zustand verstellt. Am Wassertank ist eine zweite Sensoreinrichtung angeordnet. Mittels der zweiten Sensoreinrichtung ist bei in das Gehäuse eingesetztem Wassertank das Überschreiten einer maximalen Befüllhöhe mit Wasser detektierbar. Die zweite Sensoreinrichtung ist derart ausgebildet, dass sie bei Detektion einer Überschreitung der maximalen Füllhöhe die Ventileinrichtung in den geschlossenen Zustand verstellt.

Bei der erfindungsgemäßen Kaffeemaschine kann der Austritt von Wasser aus der Kaffeemaschine sowohl bei nicht in das Gehäuse eingesetztem Wassertank als auch bei maximal befülltem Wassertank mit hoher Zuverlässigkeit vermieden werden. Gleichzeitig sind die genannten Komponenten technisch besonders einfach aufgebaut und somit preisgünstig in die Kaffeemaschine zu integrieren. insbesondere kann auf eine aufwändige, software-basierte Steuerung der Ventileinrichtung mit Hilfe einer elektronischen Steuerungseinrichtung verzichtet sein.

Bei einer bevorzugten Ausführungsform wird von der ersten Sensoreinrichtung in der Ventileinrichtung der geöffnete Zustand eingestellt, solange das Gehäuse in den Wassertank eingesetzt ist. Auf diese Weise wird sichergestellt, dass Wasser in den Wassertank eingeleitet werden kann, wenn dieser nicht aus dem Gehäuse entnommen ist.

Bei einer weiteren bevorzugten Ausführungsform wird von der zweiten Sensoreinrichtung in der Ventileinrichtung der geöffnete Zustand eingestellt, solange keine Überschreitung der maximalen Füllhöhe detektiert ist. Auf diese Weise wird sichergestellt, dass Wasser in den Wassertank eingeleitet werden kann, wenn dieser nicht aus dem Gehäuse entnommen und auch noch nicht vollständig befüllt ist.

Bei einer vorteilhaften Weiterbildung ist die elektrisch steuerbare Ventileinrichtung elektrisch bestrombar. Bei dieser Variante ist die Ventileinrichtung derart ausgebildet, dass sie bei elektrischer Bestromung in den geöffneten Zustand und ohne elektrische Bestromung in den geschlossenen Zustand verstellt ist. Diese Variante ist technisch besonders einfach zu realisieren und daher preisgünstig, da elektrisch steuerbare Ventile kommerziell in vielfältiger Form verfügbar sind.

Besonders zweckmäßig kann die erste Sensoreinrichtung als mechanischer oder elektrischer oder elektromechanischer Sensor ausgebildet sein. Solche Sensoren sind kommerziell erhältlich und somit preisgünstig.

Besonders zweckmäßig kann die zweite Sensoreinrichtung als Schwimmerschalter ausgebildet sein. Solche Schwimmerschalter sind kommerziell verfügbar und somit preisgünstig.

Zweckmäßig umfasst die Ventileinrichtung eine mit einer elektrischen Stromquelle verbindbare elektrische Stromversorgungsleitung, mittels welcher die Ventileinrichtung elektrisch bestrombar ist. Bei dieser Variante ist die Ventileirichtung derart ausgebildet, dass sie bei elektrischer Bestromung in den geschlossenen Zustand verstellt ist und ohne elektrische Bestromung in den geöffneten Zustand verstellt ist. Auf diese Weise lässt sich die Ventileinrichtung besonders einfach zwischen den beiden Zuständen verstellen.

Bevorzugt sind in der elektrischen Stromversorgungsleitung ein erstes und ein zweites Schaltelement vorgesehen, welche jeweils zwischen einem geöffneten Zustand, in welchem sie die elektrische Stromversorgungsleitung elektrisch unterbrechen und einem geschlossenen Zustand, in welchem diese Unterbrechung aufgehoben ist, verstellbar sind. Solche Schaltelemente können in Form elektromechanischer Schalter oder in Form von Halbleiterschaltern, die als Transistoren, vorzugsweise als Feldeffekt-Transistoren, realisiert sind, auf einfache Weise in die elektrische Stromversorgungsleitung integriert werden.

Besonders bevorzugt sind das erste Schaltelement mittels der ersten Sensoreinrichtung und das zweite Schaltelement mittels der zweiten Sensoreinrichtung verstellbar.

Bei einer vorteilhaften Weiterbildung stellt die erste Sensoreinrichtung bei in das Gehäuse eingesetztem Wassertank in dem ersten Schaltelement den geschlossenen Zustand ein. Bei dieser Variante stellt die zweite Sensoreinrichtung bei in das Gehäuse eingesetztem Wassertank in dem zweiten Schaltelement den geschlossenen Zustand ein, solange die maximale Befüllhöhe des Wassertanks nicht überschritten ist. Bei dieser Variante ist also sichergestellt, dass die Ventileinrichtung nur dann elektrisch bestromt wird, wenn der Wassertank im Gehäuse angeordnet und noch nicht maximal mit Wasser befüllt ist.

Weitere wichtige Merkmale und Vorteile der Erfindung ergeben sich aus den Unteransprüchen, aus den Zeichnungen und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

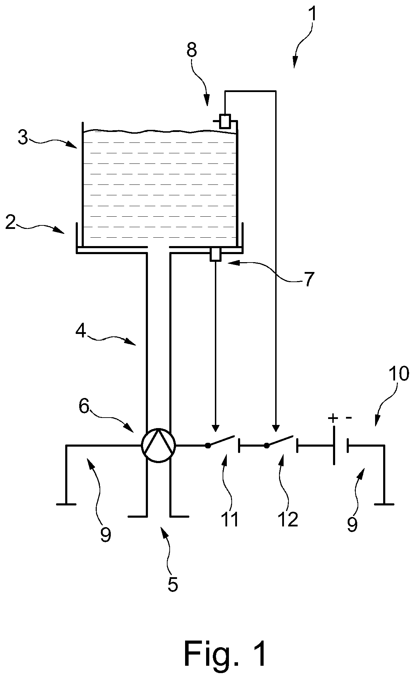

Die einzige Figur 1 zeigt ein Beispiel einer erfindungsgemäßen Kaffeemaschine 1, die als Kaffeevollautomat realisiert sein kann. Die Kaffeemaschine 1 umfasst ein Gehäuse 2, in welches ein mit Wasser befüllbarer Wassertank 3 einsetzbar ist. In Figur 1 ist die Kaffeemaschine 1 mit in das Gehäuse 2 eingesetztem Wassertank 3 dargestellt. Weiterhin umfasst die Kaffeemaschine 1 einen Anschluss 5 zum Versorgen der Kaffeemaschine 1 mit Wasser aus einer externen Wasserversorgung (nicht gezeigt). Der Wassertank 3 ist mittels einer Verbindungsleitung 4 mit dem Anschluss 5 verbunden, der mit einer externen Wasserversorgung (nicht gezeigt) verbunden werden kann. Auf diese Weise kann der Wassertank 3 der Kaffeemaschine 1 mit Wasser aus der Wasserversorgung befüllt werden. Die Verbindungsleitung 4 kann auch innerhalb des Gehäuses 2 angeordnet sein, und der Anschluss kann auch direkt am Gehäuse 5 positioniert sein.

Wie Figur 1 erkennen lässt, ist in der Verbindungsleitung 4 eine Ventileinrichtung 6 angeordnet, welche elektrisch zwischen einem geöffneten und einem geschlossenen Zustand verstellbar ist. Im geschlossenen Zustand verschließt die Ventileinrichtung 6 die Verbindungsleitung 4, so dass die Verbindung zwischen dem Wassertank 3 und dem Anschluss 5 unterbrochen ist. Im geöffneten Zustand ist diese Unterbrechung aufgehoben, d.h. die Ventileinrichtung 6 gibt die Verbindungsleitung 4 frei. Folglich kann am Anschluss 5 bereitgestelltes Wasser über die Verbindungsleitung 4 in den Wassertank 3 strömen. Die elektrisch steuerbare Ventileinrichtung 6 ist elektrisch bestrombar. Bei elektrischer Bestromung ist die Ventileinrichtung 6 in den geöffneten Zustand verstellt. Ohne elektrische Bestromung ist die Ventileinrichtung 6 in den geschlossenen Zustand verstellt.

Zwischen der Ventileinrichtung 6 und dem Wassertank 3 ist eine erste Sensoreinrichtung 7 angeordnet. Diese ist derart ausgebildet, dass sie die Ventileinrichtung 6 bei in das Gehäuse 2 eingesetztem Wassertank 3 in den geöffneten Zustand verstellt und bei aus dem Gehäuse 2 entnommenen Wassertank 3 in den geschlossenen Zustand verstellt. Auf diese Weise wird sichergestellt, dass kein Wasser aus der Verbindungsleitung 4 über das Gehäuse 2 in die Umgebung der Kaffeemaschine 1 austreten kann, wenn in das Gehäuse 2 kein Wassertank 3 eingesetzt ist. Die erste Sensoreinrichtung 7 ist bevorzugt als mechanischer oder elektrischer oder elektromechanischer Sensor ausgebildet.

Wie die Darstellung der Figur 1 belegt, ist zwischen der Ventileinrichtung 6 und dem Wassertank 3 eine zweite Sensoreinrichtung 8 angeordnet. Mittels der zweiten Sensoreinrichtung 8 ist bei in das Gehäuse 2 eingesetztem Wassertank 3 das Überschreiten einer maximalen Befüllhöhe mit Wasser detektierbar. Die zweite Sensoreinrichtung 8 ist dabei derart ausgebildet, dass sie bei Detektion einer Überschreitung der maximalen Füllhöhe die Ventileinrichtung 6 in den geschlossenen Zustand verstellt. Auf diese Weise kann verhindert werden, dass Wasser über den Wassertank 3 aus der Kaffeemaschine 1 in die Umgebung austreten kann, weil der bereits vollständig befüllte Wassertank 3 kein weiteres Wasser aus der Wasserversorgung mehr aufnehmen kann. Solange keine Überschreitung der maximalen Füllhöhe detektiert ist, wird in der Ventileinrichtung 6 von der zweiten Sensoreinrichtung 8 der geöffnete Zustand eingestellt. Die zweite Sensoreinrichtung 8 ist bevorzugt als Schwimmerschalter ausgebildet.

Die Ventileinrichtung 6 umfasst entsprechend Figur 1 eine elektrische Stromversorgungsleitung 9, die mit einer elektrischen Stromquelle 10 verbunden werden kann. Auf diese Weise kann die Ventileinrichtung 6 zum Verstellen in den geöffneten Zustand elektrisch bestromt werden. In der elektrischen Stromversorgungsleitung 9 sind in Reihe geschaltet ein erstes und ein zweites Schaltelement 11, 12 vorgesehen, welche jeweils zwischen einem geöffneten Zustand, in welchem sie die elektrische Stromversorgungsleitung 9 elektrisch unterbrechen und einem geschlossenen Zustand, in welchem diese Unterbrechung aufgehoben ist, verstellbar sind. Das erste Schaltelement 11 wird von der ersten Sensoreinrichtung 7 angesteuert. Die Ansteuerung erfolgt dabei derart, dass bei in das Gehäuse 2 eingesetztem Zustand des Wassertanks 3 das erste Schaltelement 11 in den geschlossenen Zustand verstellt ist. Das zweite Schaltelement 12 wird von der zweiten Sensoreinrichtung 8 angesteuert. Die Ansteuerung erfolgt dabei derart, dass das zweite Schaltelement 12 in den geschlossenen Zustand verstellt ist, solange keine Überschreitung der maximalen Befüllhöhe des Wassertanks 3 detektiert wird. Sind beide genannten Kriterien erfüllt, so wird die Ventileinrichtung 6 elektrisch bestromt und in den geöffneten Zustand verstellt, so dass Wasser vom Anschluss 5 zum Wassertank 3 strömen kann. Ist hingegen wenigstens eines der beiden Kriterien nicht erfüllt, so verstellt die erste oder zweite Sensoreinrichtung 7, 8 das erste bzw. zweite Schaltelement in den geöffneten Zustand. In diesem Fall wird die Ventileinrichtung 6 nicht elektrisch bestromt und verschließt die Verbindungsleitung 4. Somit wird die Wasserzufuhr vom Anschluss 5 in den Wassertank 3 oder - falls dieser nicht eingesetzt ist - in das Gehäuse 2 verhindert.

### Bezugszeichenliste

- 1: Kaffeemaschine
- 2: Gehäuse
- 3: Wassertank
- 4: Verbindungsleitung
- 5: Anschluss
- 6: Ventileinrichtung
- 7: erste Sensoreinrichtung
- 8: zweite Sensoreinrichtung
- 9: elektrische Stromversorgungsleitung
- 10: elektrische Stromquelle
- 11: erstes Schaltelement
- 12: zweites Schaltelement

## Patentansprüche

1. Kaffeemaschine (1), insbesondere Kaffeevollautomat, mit einem Gehäuse (2), in welches ein mit Wasser befüllbarer oder befüllter Wassertank (3) einsetzbar ist,
mit einem Anschluss (5) zum Versorgen der Kaffeemaschine (1) mit Wasser aus einer externen Wasserversorgung,
mit einer Verbindungsleitung (4), welche den Anschluss (5) fluidisch mit dem Wassertank (3) verbindet,
wobei in der Verbindungsleitung (4) eine elektrisch verstellbare Ventileinrichtung (6) angeordnet ist, welche zwischen einem geöffneten und einem geschlossenen Zustand verstellbar ist,
mit einer am oder im Gehäuse (3) angeordneten ersten Sensoreinrichtung (7), derart ausgebildet, dass sie die Ventileinrichtung (6) bei in das Gehäuse eingesetztem Wassertank (3) in den geöffneten Zustand verstellt und bei aus dem Gehäuse (2) entnommenem Wassertank (3) in den geschlossenen Zustand verstellt,
mit einer am oder im Wassertank (3) angeordneten zweiten Sensoreinrichtung, (8) mittels welcher bei in das Gehäuse (2) eingesetztem Wassertank (3) das Überschreiten einer maximalen Befüllhöhe mit Wasser detektierbar ist, wobei die zweite Sensoreinrichtung (8) derart ausgebildet ist, dass sie bei Detektion einer Überschreitung der maximalen Füllhöhe die Ventileinrichtung (6) in den geschlossenen Zustand verstellt.

2. Kaffeemaschine nach Anspruch 2, **dadurch gekennzeichnet, dass** von der ersten Sensoreinrichtung (7) in der Ventileinrichtung (6) der geöffnete Zustand eingestellt ist, solange der Wassertank (3) in das Gehäuse (2) eingesetzt ist.

3. Kaffeemaschine nach Anspruch 1 oder 2,
**dadurch gekennzeichnet, dass** von der zweiten Sensoreinrichtung (8) in der Ventileinrichtung (6) der geöffnete Zustand eingestellt ist, solange keine Überschreitung der maximalen Füllhöhe detektiert ist.

4. Kaffeemaschine nach einem der Ansprüche 1 bis 3,
**dadurch gekennzeichnet, dass** die elektrisch steuerbare Ventileinrichtung (6) elektrisch bestrombar ist und bei elektrischer Bestromung in den geöffneten Zustand verstellt ist und ohne elektrische Bestromung in den geschlossenen Zustand verstellt ist.

5. Kaffeemaschine nach einem der vorhergehenden Ansprüche, **dadurch gekennzeichnet, dass** die erste Sensoreinrichtung (7) als mechanischer oder elektrischer oder elektromechanischer Sensor ausgebildet ist.

6. Kaffeemaschine nach einem der vorhergehenden Ansprüche, **dadurch gekennzeichnet, dass** die zweite Sensoreinrichtung (8) als Schwimmerschalter ausgebildet ist.

7. Kaffeemaschine nach einem der vorhergehenden Ansprüche, **dadurch gekennzeichnet, dass** die elektrisch steuerbare Ventileinrichtung eine mit einer elektrischen Stromquelle (10) verbindbare elektrische Stromversorgungsleitung (9) umfasst, mittels welcher die Ventileinrichtung (6) elektrisch bestrombar ist, wobei die Ventileinrichtung (6) derart ausgebildet ist, dass sie bei elektrischer Bestromung in den geöffneten Zustand verstellt ist und ohne elektrische Bestromung in den geschlossenen Zustand verstellt ist.

8. Kaffeemaschine nach Anspruch 2, **dadurch gekennzeichnet, dass** in der elektrischen Stromversorgungsleitung (9) in Reihe geschaltet ein erstes und ein zweites Schaltelement (11, 12) vorgesehen sind, welche jeweils zwischen einem geöffneten Zustand, in welchem sie die elektrische Stromversorgungsleitung (9) elektrisch unterbrechen, und einem geschlossenen Zustand, in welchem diese Unterbrechung aufgehoben ist verstellbar sind.

9. Kaffeemaschine nach Anspruch 8, **dadurch gekennzeichnet, dass** das erste Schaltelement (11) mittels der ersten Sensoreinrichtung (7) und das zweite Schaltelement (12) mittels der zweiten Sensoreinrichtung (8) verstellbar ist.

10. Kaffeemaschine nach Anspruch 8 oder 9, **dadurch gekennzeichnet, dass** die erste Sensoreinrichtung (7) bei in das Gehäuse (2) eingesetztem Wassertank (3) in dem ersten Schaltelement (11) den geschlossenen Zustand einstellt, und dass
die zweite Sensoreinrichtung (8) bei in das Gehäuse (2) eingesetztem Wassertank (3) in dem zweiten Schaltelement (11) den geschlossenen Zustand einstellt, solange die maximale Befüllhöhe des Wassertanks (3) nicht überschritten ist.
